# EUROPEAN PATENT APPLICATION

(11) **EP 3 495 764 A1**
(43) Date of publication of application: **12.06.2019**
(21) Application number: 17206455.2
(22) Date of filing: 11.12.2017
(51) Int. Cl.: G01B 3/22, G01B 5/02, B31B 50/00

(54) **A SLEEVE SIZE METERING DEVICE, AND A METHOD**

(71) Applicant: Tetra Laval Holdings & Finance S.A., 1009 Pully (CH)
(72) Inventor: MARTINSSON, Mats, 275 72 Lövestad (SE); HANSSON, Håkan, 24593 Staffanstorp (SE)
(74) Representative: Tetra Pak - Patent Attorneys SE

(57) **Abstract**

A method for measuring the size of a sleeve (20) of a packaging material is provided. The method comprises cutting (102) the sleeve (20) in a longitudinal direction, positioning (104) one longitudinal edge (22a) of the sleeve (20) against a distal surface (46), positioning (106) a probe (62) of a measurement unit (60) in contact with the opposite longitudinal edge (22b) of the sleeve (20), and determining (108) the distance between the distal surface (46) and the probe (62) corresponding to the circumference of the sleeve (20) prior to cutting (102).

## Description

### Technical Field

The invention relates to a sleeve size metering device, as well as to a method for measuring the actual size of a sleeve made of a packaging material and intended to form a body of a liquid food package.

### Background Art

Packages, in particular individual liquid food packages, are typically manufactured at a very high speed. Although production and filling of such packages may be performed in various ways, one principle gaining increased market recognition during the recent years includes forming a cylindrical open ended body of a carton-based packaging material, and providing this sleeve-like body with a closed plastic top. When the plastic top is in place the now semi-finished package is filled through its still open bottom end, whereafter the bottom portion of the sleeve-like body is folded and sealed to form a substantially planar closed end.

When manufacturing packages according to this general principles the sleeve-like body of carton-based packaging material is provided as a blank, being sealed along its longitudinal edges by means of a certain overlap and folded along longitudinal crease lines. The term longitudinal should be understood as perpendicular to the transport direction of the blank through the machine before the seal is formed.

The sleeve-like body is thus fed to the filling machine as a flattened piece of packaging material. Once entering the filling machine the sleeve-like body of packaging material is erected and arranged onto a mandrel, which then is moved adjacent to and facing a mould. The mould and the mandrel together define a cavity into which molten plastic material is injected during injection moulding of the plastic top. The plastic top is thereby formed immediately onto the upper end of the erected sleeve.

As is understood, it is important to have a good fit between the erected sleeve and the mandrel. Should the sleeve be too small increased forces are required to fit the sleeve onto the mandrel, thereby increasing the risk of damaging the packaging material and obtaining a less than optimal centering of the plastic on top of the sleeve.. In a similar manner there is an increased risk of damaging the packaging material if the sleeve is too big; the mould will in such case not accommodate the sleeve properly and possibly result in gaps beteen the sleeve and the plastic top.

Several techniques for measuring the circumference of a sleeve have been suggested in order to ensure a proper fit of the sleeve with regards to the mandrel and the mould used for injection moulding the plastic top onto the sleeve. One device is a metal cone, having circumference indicating lines engraved along its periphery at different radii. The sleeve is arranged onto the cone and pressurized air is used for pressing the sleeve onto the cone; the final position of the sleeve will then be converted to a corresponding size by reading the engraved lines.

The prior art allows for off-line metering of the sleeve size. However, some drawbacks are associated with this technique. For example, different packaging material will experience different friction against the metal cone. The applied air pressure must therefore be adjusted based on friction, which is an extremely difficult task. Another drawback is associated with the fact that the engraved metering lines are arranged at discrete positions. No explicit value can thus be extracted from this metering technique, but only an estimated value based on the values corresponding to the most adjacent lines.

### Summary

It is an object of the invention to at least partly overcome one or more of the above-identified limitations of the prior art. In particular, it is an object to provide a sleeve size metering device which is capable of providing an explicit value of the circumference of the sleeve independently of material properties of the packaging material.

To solve these objects a method for measuring the size of a sleeve is provided. The method comprises a first step of cutting the sleeve in a longitudinal direction, a second step of positioning one longitudinal edge of the sleeve against a distal surface, and a third step of positioning a probe of a measurement unit in contact with the opposite longitudinal edge of the sleeve. From here, the method continues with a fourth step of determining the distance between the distal surface and the probe corresponding to the circumference of the sleeve prior to cutting.

According to an embodiment cutting is performed in a direction being parallel to, but spaced apart from, a longitudinal sealing of the sleeve. This ensures that the cut, which provides a surface to contact the distal surface during measurement, is in fact a surface being perpendicular to the longitudinal extension of the sleeve.

The method may further comprise fixating the sleeve before positioning said probe. This is advantageous in that any irregularities, such as crease lines, present on the packaging material of the sleeve will be flattened whereby its possible impact on the size measurement will be minimized.

Fixating the sleeve may be performed by activating at least one gas cylinder, which is advantageous in that an equal pressure may be distributed across the entire width of the sleeve.

The step of positioning the sleeve may further comprise aligning one edge of the sleeve with a lateral surface arranged perpendicular to the distal surface. By such alignment it is ensured that the measured width is perpendicular to the longitudinal extension of the sleeve.

According to a second aspect a sleeve size metering device is provided. The sleeve size metering device comprises a distal surface configured to receive a longitudinal edge of the sleeve, and a measurement unit. The measurement unit has a probe which is moveable from an idle position to a measurement position, wherein the measurement unit is configured to determine the circumference of the sleeve by determining the distance between the distal surface and the probe when in the measurement position, from a predetermined distance between the distal surface and the probe when in the idle position.

The measurement unit may be a dial indicator. In such embodiment metering is made possible using readily available equipment.

The sleeve size metering device may further comprise means for flattening the sleeve; for example, the flattening means comprises one or more gas cylinder being connected to at least one pressure member. This is advantageous in that any irregularities, such as crease lines, present on the packaging material of the sleeve will be flattened whereby its possible impact on the size measurement will be minimized.

The sleeve size metering device may further comprise a lateral surface, preferably being perpendicular to the distal surface, for receiving an edge of the sleeve during operation. By such alignment it is ensured that the measured width is perpendicular to the longitudinal extension of the sleeve.

Still other objectives, features, aspects and advantages of the invention will appear from the following detailed description as well as from the drawings.

### Brief Description of the Drawings

Embodiments of the invention will now be described, by way of example, with reference to the accompanying schematic drawings, in which
Fig. 1 is a front view of a package comprising a plastic top and a main body formed from a sleeve of a carton-based packaging material;
Fig. 2 is a top view of flattened sleeve of packaging material intended to form a main body of a package;
Fig. 3 is a perspective view of a cutting device;
Fig. 4 is a side view of the cutting device shown in Fig. 3 positioned to cut a sleeve of packaging material;
Fig. 5 is a perspective view of a sleeve size metering device according to an embodiment, here showing the rear of the device;
Fig. 6 is a perspective view of the sleeve size metering device shown in Fig. 5, here showing the front of the device;
Fig. 7 is a cross-sectional view of the sleeve size metering device shown in Figs. 5 and 6; and
Fig. 8 is a schematic view of a sleeve size metering method according to an embodiment.

### Detailed Description

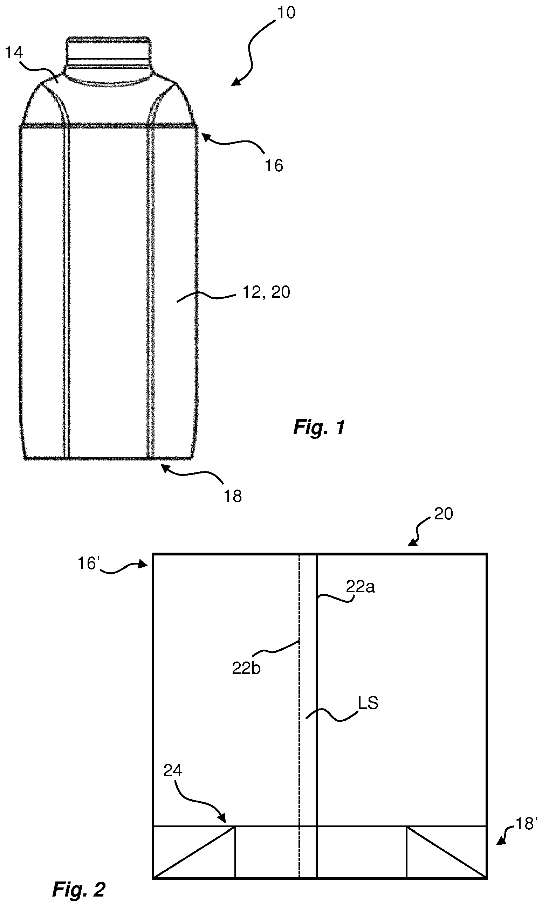

With reference to Fig. 1 a package 10 is illustrated. The package 10, being manufactured in accordance with the method described above in the background section, comprises a main body 12 formed by a sleeve 20 of packaging material, and a plastic top 14 closing the upper end 16 of the main body 12.

The sleeve 20 is shown also in Fig. 2, before the plastic top 14 is moulded onto it. The sleeve 20 is formed by a sheet of packaging material being folded such that the longitudinal edges 22a, 22b overlap. In this position the sleeve 20 is sealed, such that the longitudinal edges 22a, 22b are joined. As the packaging material typically has polymeric layers arranged both as its innermost and outmost layers, such lamination is possible by applying heat and pressure. The sealed overlap is commonly known as the longitudinal sealing LS.

In Fig. 2 the upper end 16' is indicated, which will form the upper end 16 of the main body during manufacturing. Also the bottom end 18' is indicated. The bottom end 18' of the sleeve 20 is provided with a number of crease lines 24 in order to facilitate folding and forming of the closed bottom end 18 of the package 10 indicated in Fig. 1. Preferably this bottom end 18 of the package 10 is planar such that the package 10 may stand properly.

As explained above when the package 10 is to be formed the sleeve 20 is erected to a somewhat cylindrical body, and then arranged onto a mandrel for moulding of the plastic top 14 immediately onto the upper end 16' of the sleeve 20.

For ensuring the correct moulding operation, and hence also the desired integrity and quality of the resulting package 10, measurements of the sleeve size is desired. This is preferably done off-line, i.e. external to the production equipment. For example, when a new batch of pre-manufactured sleeves 20 arrive at the production facility some samples may be measured, thus indicating the proper dimensions of the entire batch.

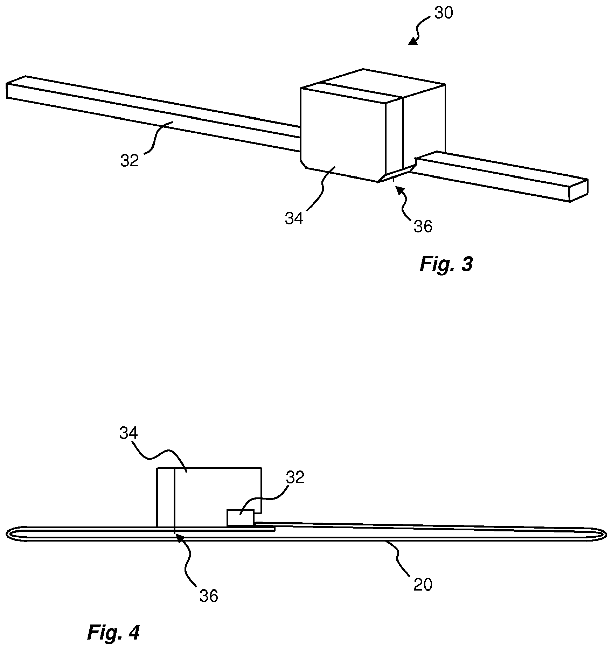

In order to measure the sleeve size in accordance with the invention described within this specification, it is required to cut the sleeve 20 in the longitudinal direction. A cutting device 30 being developed for this sole purpose is shown in Fig. 3. The cutting device 30 comprises a ruler 32 being dimensioned to extend along at least a part of the longitudinal direction of the sleeve 20. The ruler 32 is provided with a knife holder 34 being securely attached to it, whereby the knife holder 34 accommodates a knife 36 protruding out from the knife holder 34 to some extent. The knife 36 is aligned with the extension of the ruler 32, but arranged at a transversal distance from the ruler 32.

During operation the cutting device 30 is positioned onto a sleeve 20 having its longitudinal sealing LS facing upwards. The cutting device 30 is aligned such that the ruler 32 is in contact with the edge of the longitudinal sealing LS, i.e. the step formed by the upper layer of packaging material overlapping the lower layer of packaging material. Starting at one longitudinal end of the sleeve 20, the cutting device 30 is moved in the longitudinal direction thereby cutting the sleeve 20. Optionally, the knife holder 34 is slidably attached to the ruler 32 such that during cutting the ruler 32 remains stationary while the knife holder 34, and its associated knife 36, moves along the sleeve 20. Once cut, the sleeve 20 is ready for size metering.

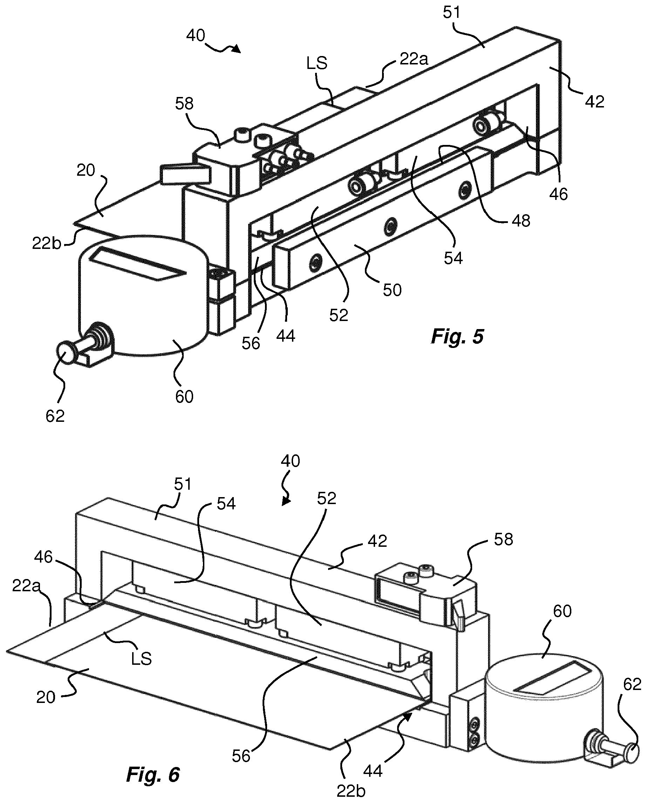

A sleeve size metering device 40 is shown in Figs. 5 and 6. The sleeve size metering device 40 comprises a frame 42. The frame 42 comprises a bottom surface 44 used for receiving the cut sleeve 20, and a distal surface 46 forming a stop for the sleeve 20. The distal surface 46 is configured to receive a longitudinal edge 22a of the sleeve 20 as is clearly shown in Fig. 6. The distal surface 46 is preferably formed by a part of the frame 42 extending vertically upwards from the bottom surface 44. The frame 42 is also provided with a lateral surface 48, formed by a stop member 50 and facing the sleeve 20. The lateral surface 48 is perpendicular to the distal surface 46, and thereby configured to receive the upper or bottom edge of the sleeve 20.

The frame 42 also comprises an upper bar 51, extending in parallel with the bottom surface 44 at a vertical distance thereof. The upper bar 51 is provided with two gas cylinders 52, 54 being connected to a common pressure member 56. Each gas cylinder 52, 54 is connected to a supply 58 of pressurized air. The pressure member 56 is moveable in the vertical direction by activation of the gas cylinders 52, 54. By such activation the pressure member 56 comes into contact with the sleeve 20, thereby planarizing the sleeve 20 as well as any irregularities present, such as crease lines.

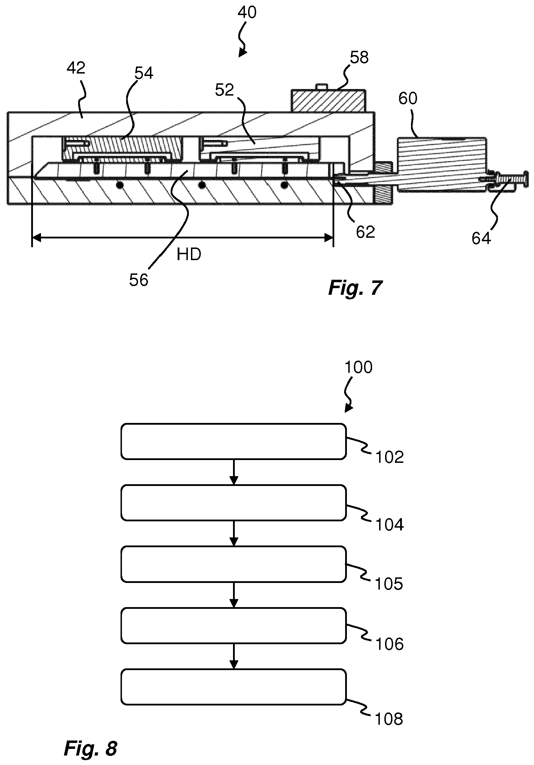

The sleeve size metering device 40 is further provided with a measurement unit 60, here in the form of a dial indicator. The dial indicator 60 is provided with a probe 62 (see Fig. 7), having a specific idle position. The dial indicator 60 is arranged at the end of the bottom surface 44, opposite the distal surface 46.

The horizontal distance HD (see Fig. 7) between the distal surface 46 and the probe 62, when in the idle position, is well-defined and predetermined. Hence, this horizontal distance forms a reference distance used to determine the width of the sleeve 20, i.e. the circumference of the main body 12 of the package 10.

The probe 62 is maneuvered by means of a handle 64. When the unfolded sleeve 20 is positioned correctly and locked in position by activation of the gas cylinders 52, 54, the handle 64 is accessed to move the probe 62 in contact with the longitudinal edge 22b of the sleeve 20. The movement of the probe 62 is measured accurately by the dial indicator. Hence the width of the sleeve 20 will be measured from the well-defined reference distance HD, adjusted by the horizontal movement of the probe 62.

Once measurement is done the probe 62 is returned to its idle position and the sleeve 20 is removed after deactivating the gas cylinders 52, 54 thus also releasing the pressure from the pressure member 56. The sleeve size metering device 40 is then again ready for a new measurement on another sleeve sample.

Further details of the sleeve size metering device 40 are shown in Fig. 7. As can be seen in Fig. 7 pressurized air enters the supply 58, and is fed through drilled conduits within the frame 42 to each gas cylinder 52, 54. These gas cylinders 52, 54 are rigidly attached to the pressure member 56 providing an equal pressure to the entire sleeve 20.

As is evident, other means for flattening the sleeve 20 may be provided instead of the gas cylinders 52, 54 and the associated pressure member 56. For example, thee components could be replaced by a vacuum pump drawing the sleeve 20 towards the bottom surface 44. Preferably the flattening means should operate in a manner ensuring that any crease lines present on the sleeve 20 will be flattened. Also, the flattening means should provide a fix position of the sleeve 20 during measurements.

The dial indicator 60 could also be replaced by any other device being suitable for measuring a distance between a reference surface 44 and a measuring point, in which measuring point there is a contact to the longitudinal edge 22b of the sleeve 20.

As can be seen in Fig. 7 the reference distance HD is a constant value between the distal surface 46 and the end of the probe 62. When measuring the sleeve size the probe 62 is retracted, or moved to the right in Fig. 7, thus allowing a sleeve 20 to fit between the distal surface 46 and the end of the probe 62. Once the sleeve 20 is correctly positioned against the distal surface 46 and the lateral surface 48, the probe 62 is allowed to return back towards its idle position. However before the probe 62 reaches its idle positon the probe 62 will contact the longitudinal edge 22b of the sleeve. The dial indicator will measure the distance between the idle position and the current position of the probe 62, in which current position the probe 62 rests against the longitudinal edge 22b of the sleeve 20.

Now turning to Fig. 8 a method 100 is schematically illustrated. The method 100 is performed in order to accurately measure the actual circumference of the sleeve 20, as described above. The method comprises a first step 102 of cutting the sleeve 20 in a longitudinal direction, preferably in a direction being parallel to, but spaced apart from, a longitudinal sealing LS of the sleeve 20. In a second step 104 one longitudinal edge 22a of the sleeve 20 is positioned against a distal surface 46. This step may further comprise aligning one edge of the sleeve 20 with a lateral surface 48 arranged perpendicular to the distal surface 46.

Optionally, a step 105 of fixating the sleeve 20 is performed before a step 106 of positioning the probe. In step 106, the probe 62 of a measurement unit 60 is positioned in contact with the opposite longitudinal edge 22b of the sleeve 20.

In a last step 108 the distance between the distal surface 46 and the probe 62, corresponding to the circumference of the sleeve 20 prior to cutting 102, is determined as explained earlier.

From the description above follows that, although various embodiments of the invention have been described and shown, the invention is not restricted thereto, but may also be embodied in other ways within the scope of the subject-matter defined in the following claims.

## Claims

1. A method for measuring the size of a sleeve (20) of a packaging material, the method comprising:
cutting (102) the sleeve (20) in a longitudinal direction,
positioning (104) one longitudinal edge (22a) of the sleeve (20) against a distal surface (46),
positioning (106) a probe (62) of a measurement unit (60) in contact with the opposite longitudinal edge (22b) of the sleeve (20), and
determining (108) the distance between the distal surface (46) and the probe (62) corresponding to the circumference of the sleeve (20) prior to cutting (102).

2. The method according to claim 1, wherein cutting (102) is performed in a direction being parallel to, but spaced apart from, a longitudinal sealing (LS) of the sleeve (20).

3. The method according to claim 1 or 2, further comprising fixating (105) the sleeve (20) before positioning (106) said probe (62).

4. The method according to claim 3, wherein fixating (105) is performed by activating at least one gas cylinder (52, 54).

5. The method according to any one of the preceding claims, wherein positioning (104) the sleeve (20) further comprises aligning one edge of the sleeve (20) with a lateral surface (48) arranged perpendicular to the distal surface (46).

6. A sleeve size metering device (40), comprising a distal surface (46) and a measurement unit (60), said measurement unit (60) having a probe (62) which is moveable from an idle position to a measurement position, wherein the measurement unit (60) is configured to determine the circumference of a sleeve (20) by determining the distance between the distal surface (46) and the probe (62) when in the measurement position, from a predetermined distance (HD) between the distal surface (46) and the probe (62) when in the idle position.

7. The sleeve size metering device (40) according to claim 6, wherein the measurement unit (60) is a dial indicator.

8. The sleeve size metering device (40) according to claim 6 or 7, further comprising means for flattening the sleeve (20).

9. The sleeve size metering device (40) according to claim 8, wherein said flattening means comprises at least one gas cylinder (52, 54) being connected to a pressure member (56).

10. The sleeve size metering device (40) according to claim 9, wherein a plurality of gas cylinders (52, 54) are connected to a common pressure member (56).

11. The sleeve size metering device (40) according to any one of claims 6-9, further comprising a lateral surface (58) for receiving an edge of the sleeve (20) during operation.

12. The sleeve size metering device (40) according to claim 11, wherein the lateral surface (48) is perpendicular to the distal surface (46).
